# EUROPÄISCHE PATENTSCHRIFT

(11) **EP 1 504 983 B1**
(45) Veröffentlichungstag und Bekanntmachung des Hinweises auf die Patenterteilung: **14.06.2006**
(21) Anmeldenummer: 03102483.9
(22) Anmeldetag: 08.08.2003
(51) Int. Cl.: B62D 21/11

(54) **Hilfsrahmen für Fahrzeuge**
Vehicle subframe
Châssis auxiliaire pour véhicules

(43) Veröffentlichungstag der Anmeldung: 09.02.2005
(73) Patentinhaber: Ford Global Technologies, LLC, A subsidary of Ford Motor Company, Dearborn, MI 48126 (US)
(72) Erfinder: Frantzen, Michael Johannes, 52076 Aachen (DE); David, Wolfgang, Dr., 52074 Aachen (DE); Simon, Marc, 50735 Köln (DE); Porschen, Peter, 50170 Kerpen (DE); Hallfeldt, Torsten, 52249 Eschweiler (DE)
(74) Vertreter: Drömer, Hans-Carsten

(56) Entgegenhaltungen:
- EP-A- 0 779 204
- EP-A- 1 270 374
- US-A- 5 593 001

## Beschreibung

Die Erfindung betrifft ein Kraftfahrzeug mit einem Hilfsrahmen zur Aufnahme von Aufhängungsbauteilen, um die Aufhängungsbauteile mit einem Fahrzeugaufbau zu verbinden, wobei der Hilfsrahmen als stranggepreßtes Aluminiumprofil ausgebildet ist, der in einer horizontalen Richtung stranggepreßt ist.

Derartige Hilfsrahmen sind bekannt. Diese werden in Personenwagen zur Verbindung von Aufhängungsbauteilen mit dem Fahrzeugaufbau eingesetzt. Um sicherzustellen, daß der Personenwagen z. B. bei extremen Fahrmanövern eine gute dynamische Leistungsfähigkeit aufweist, muß der Hilfsrahmen eine ausreichende Steifigkeit und Festigkeit aufweisen. Üblicherweise werden die bekannten Hilfsrahmen aus Stahl, z. B. aus geformten Metallblechen, Rohren oder aus Gußstücken hergestellt. Der Hilfsrahmen kann mit oder ohne Gummilager mit dem Fahrzeugaufbau verbunden werden. Diese derart hergestellten Hilfsrahmen sind jedoch sehr schwer. Um das Gewicht zu reduzieren ist bekannt, daß die Aufhängungsbauteile aus Aluminium hergestellt werden. Dies können z. B. Querlenker, Lenkstöcke oder Dämpferstangen sein, die an dem Hilfsrahmen befestigt werden. Aluminium ist im Vergleich zu Stahl allerdings teuer. Derzeit betragen die Unterschiede von Aluminium zu Stahl ca. das Fünffache im Materialpreis bzw. ca. das Dreifache des Herstellungspreises des erfindungsgemäßen Hilfsrahmens gegenüber dem Stande der Technik.

Nachteilig ist weiterhin, daß die im Vergleich zu Stahl geringe Dichte des Aluminiums in Bezug auf eine Werkzeugausgestaltung und einen höheren Verschleiß des Werkzeugs wegen der Adhäsion des Stahlwerkzeugs und des Aluminiumblechs und wegen der im Vergleich zu Stahl geringeren Umformbarkeit des Blechmaterials aus Aluminium beachtet werden muß.

Die EP 1 270 374 A2, die dem Oberbegriff des Anspruch 1 zugrundeliegt, betrifft einen Querträger einer Kraftfahrzeugaufhängung mit einem zentralen Grundkörper und zwei separaten Seitenelementen. Der zentrale Grundkörper ist stranggepreßt.

Auch die US 5,593,001 offenbart einen stranggepreßten Querträger.

Ein Hilfsrahmen mit einem Leichtmetall-Gussgehäuse einer Zahnstangenlenkung und an diesem angeordneten konsolartigen seitlichen Befestigungsarmen mit Lagern zur lösbaren Anordnung an einem Fahrzeugaufbau und Halterungsarmen mit Lagern zur schwenkbaren Anlenkung von Radführungslenkern ist in der EP 0 779 204 A1 offenbart. Der Hilfsrahmen ist als Anordnungsmodul für Aggregate und/oder Aggregatteile und als Montagemodul mit definierten Anschlussstellen der Aggregate und/oder Aggregatteile ausgebildet.

Der Erfindung liegt die Aufgabe zugrunde, einen verbesserten Hilfsrahmen zur Verfügung zu stellen, der wesentlich leichter und dabei in der Herstellung preiswerter ist.

Erfindungsgemäß wird die Aufgabe dadurch gelöst, dass der Hilfsrahmen ein Lenkgehäuse aufweist, wobei der Hilfsrahmen einstückig mit dem Lenkgehäuse ausgebildet ist, und wobei das Aluminiumprofil als rechteckiger Hohlkörper mit Kammern ausgebildet ist, die stirnseitig geöffnet sind, und wobei das Aluminiumprofil an einer Breitseitenwandung eine geschlossene Erhebung mit einem im wesentlichen zylindrischen Kanal aufweist, die das Lenkgehäuse bilden.

Der Erfindung liegt die Erkenntnis zugrunde, daß sich Aluminium im Gegensatz zu Stahl durch Strangpressen relativ einfach und kostengünstig in beliebig komplizierte Profilformen bringen läßt. Strangpressen ist somit eine alternative Herstellungsvariante für Hilfsrahmen. Hierbei wird lediglich eine Vorrichtung benötigt um ein Basisteil durch Strangpressen herzustellen. Um leichte Hilfsrahmen zu erhalten, kann das Basisteil zweckmäßig mittels Schneidvorrichtungen in Hilfsrahmen mit den gewünschten Abmessungen geschnitten werden. Dies ist auch deshalb günstig, da hierdurch ein reproduzierbarer Herstellungsprozeß erreicht wird, der die Kosten erheblich reduziert. Vorteilhaft ist hierbei zudem, daß Aluminium im Vergleich zu Stahl wesentlich widerstandsfähiger gegen Korrosionseinflüsse ist.

Günstig im Sinne der Erfindung ist, wenn das Lenkgehäuse einstückig mit dem Hilfsrahmen hergestellt wird. Hierdurch wird eine weitere, erhebliche Gewichts- und Kostenreduzierung erreicht.

Weitere vorteilhafte Ausgestaltungen sind in den Unteransprüchen und der folgenden Figurenbeschreibung beschrieben. Es zeigen die Figuren 4 bis 6 ein Ausführungsbeispiel der Erfindung, wobei die Figuren 1 bis 3 Ausführungsformen außerhalb des Umfangs von Anspruch 1 zeigen:
- Fig. 1: ein stranggepreßtes Aluminiumprofil in einer perspektivischen Ansicht,
- Fig. 2: eine zweite Ausführungsform eines Aluminiumprofils,
- Fig. 3: eine dritte Ausführungsform eines Aluminiumprofils,
- Fig. 4: ein stranggepreßtes Aluminiumprofil mit integriertem Lenkgehäuse,
- Fig. 5: eine perspektivische Teilansicht aus Figur 4 mit montierten Lenkgestänge,
- Fig. 6: eine Teil-Seitenansicht aus Figur 4.

In den unterschiedlichen Figuren sind gleiche Teile mit denselben Bezugszeichen versehen, so daß sie in der Regel auch nur einmal beschrieben werden.

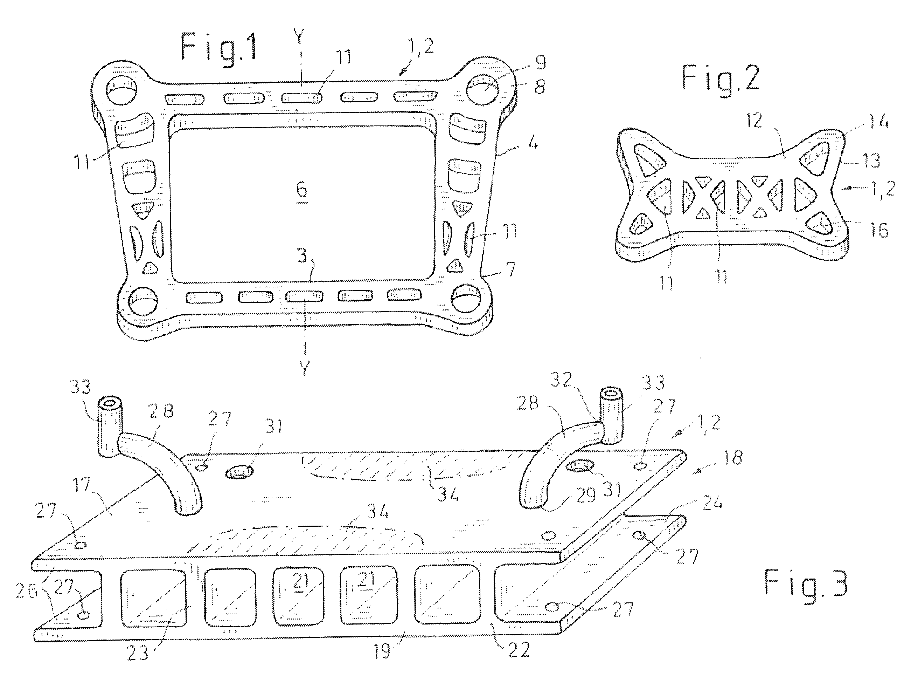

Figur 1 zeigt einen Hilfsrahmen 1, der als stranggepreßtes Aluminiumprofil 2 ausgebildet ist. Das Aluminiumprofil 2 ist vorzugsweise in einer vertikalen Richtung stranggepreßt. Die vertikale Richtung wird hierbei als von oben nach unten bzw. von unten nach oben definiert. Das Aluminiumprofil 2 ist im wesentlichen viereckig mit Querstreben 3 und senkrecht dazu angeordneten Längsstreben 4 ausgebildet. Die Längsstreben 4 und Querstreben 3 umfassen eine Öffnung 6 des Hilfsrahmens 1. Die Längsstreben 4 verbreitern sich jeweils von einer Querstrebe 3 zur dazu gegenüberliegenden Querstrebe 3. An seinen Ecken 7 ist das Aluminiumprofil 2 abgerundet, wobei innere Übergänge jeweils von den Querstreben 3 zu den Längstreben 4 innerhalb der Öffnung 6 verrundet sind. Außenseitig sind an den Ecken 7 Lagerohren 8 angeordnet. Die Lagerohren 8 weisen jeweils runde Durchgangslöcher 9 auf. In den Durchgangslöchern 9 können geeignete Befestigungsmittel aufgenommen werden, mit denen der Hilfsrahmen 1 mit dem Fahrzeugaufbau verbunden werden kann. Zur Schwingungsisolation können die Befestigungsmittel in Gummilagern oder dergleichen aufgenommen sein, die an die Durchgangslöcher 9 angepaßt sind. Hierbei können scheibenförmige Gummilager an den Rändern der Durchgangslöcher 9 anliegen, oder vorzugsweise Gummilager mit einer Durchgangsöffnung in die Durchgangslöcher 9 eingesteckt werden.

In den jeweiligen Querstreben 3 und Längsstreben 4 sind Ausnehmungen 11 eingebracht. Die Ausnehmungen 11 weisen verschiedene geometrische Ausgestaltungen auf, wobei die Ausnehmungen 11 in den Querstreben 3 vorzugsweise jeweils rechteckförmig ausgestaltet sind. Die jeweils diametral zu einer Mittelachse Y-Y gegenüberliegenden Ausnehmungen 11 in den Längsstreben 4 weisen ebenfalls jeweils eine gleichartige Ausgestaltung auf. Der in der Figur 1 dargestellte Hilfsrahmen 1 ist ein sogenannter Perimeterrahmen, der vorzugsweise bei größeren Personenwagen der Mittelklasse Verwendung finden kann.

Figur 2 zeigt eine zweite Ausführungsform des Hilfsrahmens 1, der als stranggepreßtes Aluminiumprofil 2 ausgebildet ist, allerdings mit dem Unterschied, daß der Hilfsrahmen 1 in dem dargestellten Ausführungsbeispiel als Vollkörper 12 hergestellt ist. Der Vollkörper 12 weist an seinen Ecken 13 Lagerohren 14 mit im wesentlichen dreieckförmigen Durchgangslöchern 16 auf. Die Durchgangslöcher 16 können aber auch ähnlich wie zu Figur 1 beschrieben rund ausgestaltet sein. Eine Befestigung des Hilfsrahmens 1 und insbesondere die Maßnahmen zur Schwingungsisolierung sind ähnlich wie zu Figur 1 beschrieben. Des Weiteren weist der Vollkörper 12 bevorzugt systematisch eingebrachte, dreieckförmige Ausnehmungen 11 auf. Der in Figur 2 dargestellte Hilfsrahmen 1 kann vorzugsweise bei Kleinwagen eingesetzt werden.

Sowohl die Ausnehmungen 11 als auch die Durchgangslöcher 9 und 16 werden jeweils bei der Herstellung des Hilfsrahmens 1 während des Strangpressens eingebracht, damit der Hilfsrahmen 1 zusätzlich zu dem Gewichtsverlust, der durch die erfindungsgemäße Ausgestaltung mittels des stranggepreßten Aluminiumprofils 2 erreichbar ist in seinem Gewicht reduziert wird. Hierbei sollten die jeweiligen Ausnehmungen 11 und Durchgangslöcher 9 und 16 aber derart ausgestaltet sein, daß die Festigkeitseigenschaften des Aluminiumprofils 2 nicht reduziert werden. Die Ausnehmungen 11 und Durchgangslöcher 9 und 16 können selbstverständlich auch nach dem Strangpressen in den Hilfsrahmen 1 eingearbeitet werden.

Figur 3 zeigt eine dritte Ausführungsform eines Hilfsrahmens 1, der als stranggepreßtes Aluminiumprofil 2 ausgebildet ist. Das Aluminiumprofil 2 ist allerdings in einer horizontalen Richtung stranggepreßt. Die horizontale Richtung wird hierbei als Richtung von rechts nach links, von links nach rechts oder von vorne nach hinten oder von hinten nach vorne definiert. Das Aluminiumprofil 2 ist als rechteckige Platte 17 mit Breitseiten 18 und dazu senkrechten Längsseiten 19 ausgebildet. In dem Aluminiumprofil 2 sind Kammern 21 eingebracht. Die Kammern 21 erstrecken sich parallel zu den Breitseiten 18 und jeweils parallel zueinander durchgehend von einer längsseitigen Stirnseite 22 zu einer dazu gegenüberliegenden längsseitigen Stirnseite. Seitlich sind benachbarte Kammern 21 mittels durchgehender Stege 23 getrennt. An den Breitseiten 18 weist das Aluminiumprofil 2 jeweils parallel zu den Kammern 21 verlaufende Aufnahmevorrichtungen 24 auf. Die Aufnahmevorrichtungen 24 sind jeweils an den Breitseiten 18 geöffnet, so daß die Aufnahmevorrichtung 24 Ober- und Unterseitige Flansche 26 aufweist. In den Ober- und Unterseitigen Flanschen 26 sind jeweils zueinander kongruente Bohrungen 27 eingebracht. Vorzugsweise kann von der Aufnahmevorrichtung 24 ein Querlenker aufgenommen werden, der mittels geeigneter Befestigungsvorrichtungen, die durch die Bohrungen 27 geführt werden befestigt wird. Zur Schwingungsisolierung kann der Querlenker scheibenförmige Gummilager aufweisen, die jeweils an einer zum Querlenker weisenden Seite des jeweiligen Flansches 26 und an dem Querlenker anliegen.

Weiter weist der Hilfsrahmen 1 an einer Oberfläche Befestigungsmittel 28 zur Befestigung des Hilfsrahmens 1 mit dem Fahrzeugaufbau auf. Die Befestigungsmittel 28 sind mit einem Befestigungsende 29 in Bohrungen 31 eingesetzt und mittels stoffschlüssiger Verbindung, z. B. Schweißen mit dem Hilfsrahmen 1 verbunden. Die Befestigungsmittel 28 stehen von dem Hilfsrahmen 1 ab und verlaufen in dem dargestellten Ausführungsbeispiel von dem Befestigungsende 29 leicht gebogen in Richtung zur Breitseite 18. An ihren freien Enden 32 weisen die Befestigungsmittel 28 einen hammerkopfförmigen Fortsatz 33 auf. Die Befestigungsmittel 28 können aus Vollmaterial oder vorzugsweise aus Hohlkörpern wie z. B. Rohren bestehen. Der hammerkopfförmige Fortsatz 33 ist als Hohlkörper zur Aufnahme von Bolzen geeignet, mit denen eine Verbindung zum Fahrzeugaufbau herstellbar ist. Zur Schwingungsisolierung kann der hammerkopfförmige Fortsatz 33 Gummilager aufweisen, in denen die Bolzen gelagert sind. Selbstverständlich können die Befestigungsmittel 28 auch andere Ausgestaltungen als die in Figur 3 dargestellte, beispielhafte Ausführungsform aufweisen.

Zur weiteren Gewichtsreduzierung kann der Hilfsrahmen 1 z. B. fräsend bearbeitet werden, um Material zu entfernen. Beispielhafte Ausnehmungsbereiche sind in Figur 3 leicht schraffiert mit einer kurzgestrichelten Begrenzungslinie 34 dargestellt, wobei der Hilfsrahmen 1 z. B. knochenförmig ausgestaltet werden könnte.

Die in den Figuren 1 bis 3 beschriebenen Hilfsrahmen 1 sind jeweils als stranggepreßtes Aluminiumprofil 2 von einem Basisteil, das kontinuierlich stranggepreßt ist mittels geeigneter Schneidvorrichtung auf die erforderlichen Abmessungen abgeschnitten. Das Aluminiumstrangpreßprofil 2 kann aber auch aus stranggepreßten Einzelteilen zusammengesetzt werden, wobei vorzugsweise eine stoffschlüssige Verbindung, wie z. B. mittels Schweißen angewendet wird.

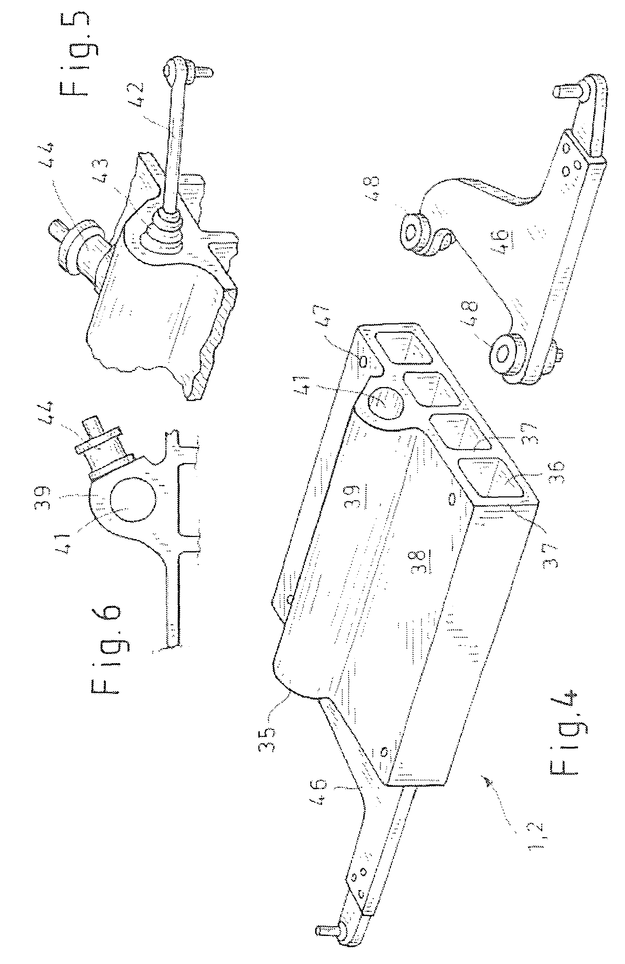

Figur 4 zeigt einen Hilfsrahmen 1, der ein Lenkgehäuse 35 aufweist, wobei der Hilfsrahmen 1 einstückig mit dem Lenkgehäuse 35 ausgebildet ist. Der Hilfsrahmen 1 mit dem Lenkgehäuse 35 ist als stranggepreßtes Aluminiumprofil 2 ausgebildet. Der Hilfsrahmen 1 ist vorzugsweise quer zu einer Fahrzeuglängsachse, und somit in einer horizontalen Richtung von rechts nach links oder von links nach rechts stranggepreßt.

Das Aluminiumprofil 2 ist als rechteckiger Hohlkörper mit vorzugsweise vier Kammern 36 ausgebildet. Selbstverständlich können auch mehr oder weniger Kammern 36 vorgesehen sein. Die Kammern 36 sind stirnseitig geöffnet, wobei jeweils benachbarte Kammern 36 mittels eines Steges 37 getrennt sind. Die beiden äußeren Kammern 36 sind ebenfalls mittels eines Steges 37 geschlossen. An einer Breitseitenwandung 38 weist das Aluminiumprofil 2 eine geschlossene Erhebung 39 mit einem im wesentlichen zylindrischen Kanal 41 auf. Die Erhebung 39 und der Kanal 41 bilden zusammen das Lenkgehäuse 34 aus. Die Erhebung 39 mit dem Kanal 41 sind im dargestellten Ausführungsbeispiel exzentrisch zu einer Mittelachse Y-Y angeordnet.

Eine Vergrößerung in Figur 5 zeigt, wie ein in dem Kanal 41 aufgenommenes Lenkgestänge 42 von einem Faltenbalg 43 geschützt stirnseitig aus dem Kanal 41 herausgeführt ist. Weiter ist in Figur 5 eine Anbindungsvorrichtung 44 zur Aufnahme einer Lenkwelle dargestellt. In Figur 6 ist deutlich gezeigt, daß die Anbindungsvorrichtung 44 etwas winklig von der Erhebung 39 absteht. Die Anbindungsvorrichtung 44 ist eine Öffnung der Erhebung 39 drehsicher eingesetzt.

Weiterhin zeigt Figur 4, daß jeweils in den beiden äußeren Kammern 36 ein Querlenker 46 aufnehmbar ist. Zur Befestigung des Querlenkers 46 sind in der Breitseitenwandung 38 jeweils Bohrungen 47 eingebracht, durch die geeignete Befestigungsmittel geführt werden, die den Querlenker 46 mit dem Aluminiumprofil 2 verbinden Die Befestigungsmittel können stoffschlüssig oder mittels Schraubverbindungen mit dem Hilfsrahmen 1 verbunden sein. Auf einer Seite der Figur 4 ist der Querlenker 46 bereits montiert, während der Querlenker 46 auf der dazu gegenüberliegenden Seite kurz vor der Montage dargestellt ist. Erkennbar ist hier, daß zur Schwingungsisolierung scheibenförmige Gummilager 48 an dem Querlenker 46 angeordnet sind.

Selbstverständlich ist es im Sinne der Erfindung günstig, wenn der Hilfsrahmen 1 aus einem kontinuierlich stranggepreßten Basisteil mittels geeigneter Schneidvorrichtungen abgeschnitten wird. Der Hilfsrahmen 1 kann aber erfindungsgemäß auch aus stranggepreßten Einzelteilen bestehen, die miteinander verbunden werden, wobei vorzugsweise eine stoffschlüssige Verbindung z. B. mittels Schweißen denkbar ist. Aber auch andere Verbindungsarten sind möglich.

Die Erfindung ist nicht auf die beschriebenen Ausführungsformen beschränkt, sondern umfaßt auch alle gleichwirkenden Mittel oder Kombinationen. Insbesondere die räumlich-geometrische Ausgestaltung des Hilfsrahmens 1 kann entsprechend dem jeweiligen Verwendungszweck eine andere sein. Aufhängungsbauteile können zum Beispiel Querlenker und/oder Lenkstöcke und/oder dergleichen sein.

## Patentansprüche

1. Hilfsrahmen (1), vorzugsweise für Kraftfahrzeuge, zur Aufnahme von Aufhängungsbauteilen, um diese mit einem Fahrzeugaufbau zu verbinden, wobei der Hilfsrahmen (1) als stranggepreßtes Aluminiumprofil (2) ausgebildet ist, der in einer horizontalen Richtung stranggepreßt ist
**dadurch gekennzeichnet, daß**
der Hilfsrahmen (1) ein Lenkgehäuse (35) aufweist, wobei der Hilfsrahmen (1) einstückig mit dem Lenkgehäuse (35) ausgebildet ist, und wobei das Aluminiumprofil (2) als rechteckiger Hohlkörper mit Kammern (36) ausgebildet ist, die stirnseitig geöffnet sind, und wobei das Aluminiumprofil (2) an einer Breitseitenwandung (38) eine geschlossene Erhebung (39) mit einem im wesentlichen zylindrischen Kanal (41) aufweist, die das Lenkgehäuse (34) bildet.

2. Hilfsrahmen (1) nach Anspruch 1,
**dadurch gekennzeichnet, daß**
von den jeweils äußeren Kammern (36) ein Querlenker (46) aufnehmbar ist.

3. Hilfsrahmen (1) nach Anspruch 1 oder 2,
**dadurch gekennzeichnet, daß**
der Hilfsrahmen (1) von einem kontinuierlich stranggepreßten Basisteil mittels geeigneter Schneidvorrichtungen abgeschnitten ist.

4. Hilfsrahmen (1) nach einem der vorhergehenden Ansprüche,
**dadurch gekennzeichnet, daß**
der Hilfsrahmen (1) aus stranggepreßten Einzelteilen besteht, die miteinander verbunden sind.

## Claims

1. Subframe (1), preferably for motor vehicles, for holding suspended components, in order to connect them to a vehicle body, the subframe (1) being embodied as an extruded aluminium section (2) which is extruded in a horizontal direction,
**characterized in that**
the subframe (1) has a steering gear housing (35), the subframe (1) being embodied in one piece with the steering gear housing (35), and the aluminium section (2) being embodied as a rectangular hollow body having chambers (36) which are open at the ends, and the aluminium section (2) having, on one lateral side wall (38), a closed elevation (39) with an essentially cylindrical duct (41), the elevation forming the steering gear housing (34).

2. Subframe (1) according to Claim 1,
**characterized in that**
a transverse link (46) can be held by each of the two outer chambers (36).

3. Subframe (1) according to Claim 1 or 2,
**characterized in that**
the subframe (1) is cut off from a continuously extruded base part by means of suitable cutting devices.

4. Subframe (1) according to one of the preceding claims,
**characterized in that**
the subframe (1) is composed of extruded individual parts, which are connected to one another.

## Revendications

1. Châssis auxiliaire (1), de préférence pour véhicules, servant à recevoir des composants d'accrochage, afin de les assembler à une carrosserie de véhicule, le châssis auxiliaire (1) étant réalisé sous forme de profilé en aluminium filé (2), qui est filé dans une direction horizontale,
**caractérisé en ce que**
le châssis auxiliaire (1) présente un boîtier de direction (35), le châssis auxiliaire (1) étant réalisé d'une seule pièce avec le boîtier de direction (35), et le profilé en aluminium (2) étant réalisé sous forme de corps creux rectangulaire avec des chambres (36) qui sont ouvertes du côté frontal, et le profilé en aluminium (2) présentant au niveau d'une paroi du côté large (38) un rehaussement fermé (39) avec un canal essentiellement cylindrique (41) qui forme le boîtier de direction (34).

2. Châssis auxiliaire (1) selon la revendication 1,
**caractérisé en ce qu'**
un bras latéral (46) peut être reçu par les chambres extérieures respectives (36).

3. Châssis auxiliaire (1) selon la revendication 1 ou 2, **caractérisé en ce que**
le châssis auxiliaire (1) est découpé dans une partie de base filée en continu au moyen de dispositifs de coupe appropriés.

4. Châssis auxiliaire (1) selon l'une quelconque des revendications précédentes,
**caractérisé en ce que**
le châssis auxiliaire (1) se compose de parties individuelles filées qui sont assemblées les unes aux autres.
